# EUROPEAN PATENT APPLICATION

(11) **EP 4 488 826 A1**
(43) Date of publication of application: **08.01.2025**
(21) Application number: 23210858.9
(22) Date of filing: 20.11.2023
(51) Int. Cl.: G06F 9/30, G06F 9/38

(54) **INSTRUCTION TAGGING FOR INTRA-OBJECT MEMORY TAGGING**

(30) Priority: 01.07.2023 US 202318346220
(71) Applicant: Intel Corporation, Santa Clara, CA 95054 (US)
(72) Inventor: Durham, David, Beaverton, 97007 (US)
(74) Representative: Goddar, Heinz J.

(57) **Abstract**

Techniques for instruction tagging for intra-object memory tagging are described. In an embodiment, an apparatus includes an instruction decoder to decode a first instruction having an instruction tag value; and execution circuitry coupled to the instruction decoder, the execution circuitry to perform one or more operations corresponding to the first instruction, including generating a first data tag value based on the instruction tag value and a relative enumeration in a pointer to data.

## Description

### BACKGROUND

Computers and other information processing systems may be vulnerable to a wide variety of software exploits. Therefore, memory safety and security are important concerns in computer system architecture and design to defend against vulnerabilities that may be present in software.

### BRIEF DESCRIPTION OF DRAWINGS

Various examples in accordance with the present disclosure will be described with reference to the drawings, in which:
FIG. 1A illustrates a computing system for instruction tagging according to an embodiment.
FIG. 1B illustrates granular memory locations with corresponding tags stored in a tag table according to an embodiment.
FIGURES 2A, 2B, 2C, 2D, and 2E illustrate aspects of instruction tagging according to an embodiment.
FIG. 3 illustrates illustrate a method for instruction tagging according to an embodiment.
FIG. 4 illustrates an example computing system.
FIG. 5 illustrates a block diagram of an example processor and/or System on a Chip (SoC) that may have one or more cores and an integrated memory controller.
FIG. 6A is a block diagram illustrating both an example in-order pipeline and an example register renaming, out-of-order issue/execution pipeline according to examples.
FIG. 6B is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for instruction tagging for intra-object memory tagging. According to some examples, an apparatus includes an apparatus includes an instruction decoder to decode a first instruction having an associated instruction tag value; and execution circuitry coupled to the instruction decoder, the execution circuitry to perform one or more operations corresponding to the first instruction, including generating a first data tag comparison value based on the instruction tag value and a relative enumeration in a pointer to data, and comparing with a second tag value stored in memory associated with an accessed portion of the data.

As mentioned in the background section, memory safety and security are important concerns in computer system architecture and design.

Examples of computer memory safety violations include overflowing a buffer to cause adjacent memory locations to be overwritten, reading past the end of a buffer, and creating a dangling pointer that is not resolved to a valid destination (e.g., use-after-free vulnerability). Some approaches to protecting memory from attacks such as these include tagging data with metadata to encode information about ownership, memory size, location, type, version, etc. However, these approaches, particularly for implementations with fine-grained tagging, may require additional storage and/or additional instructions and may negatively impact performance. Embodiments according to this specification may provide approaches using less storage (e.g., less metadata) and/or having less of an impact on performance, even for protecting data at fine granularity.

For example, embodiments may use tagging of individual instructions, in conjunction with memory tagging, to isolate both object instances and their individual member variables from each other. In embodiments, tagging of a member variable (e.g., each and every member variable of a data object) may be associated with an object instance and instruction tag enumeration. By uniquely tagging member variables using instruction tags to be matched with memory tags, protection may be maintained despite software vulnerabilities such as allowing one member variable to flow into another.

Embodiments, as may be described and/or illustrated by example below and/or in the figures, may use instruction tagging and tagged addressing (pointer tagging) to protect individual tagged members of an object, structure, frame. etc. For example, object instances (e.g., each object instance) and object member variables (e.g., each object member variable) may be tagged at a hardware level with a unique value to provide differentiation between objects and members within objects.

Descriptions of embodiments, based on instruction tags, relative enumeration in pointers, cryptographic capability computing (C3), etc., are provided as examples. Embodiments may include and/or relate to other memory safety techniques.

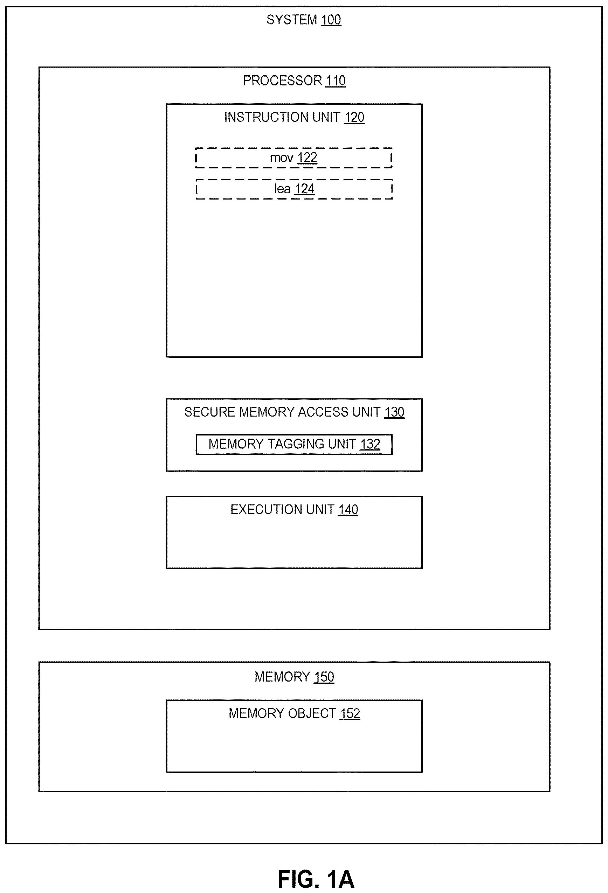

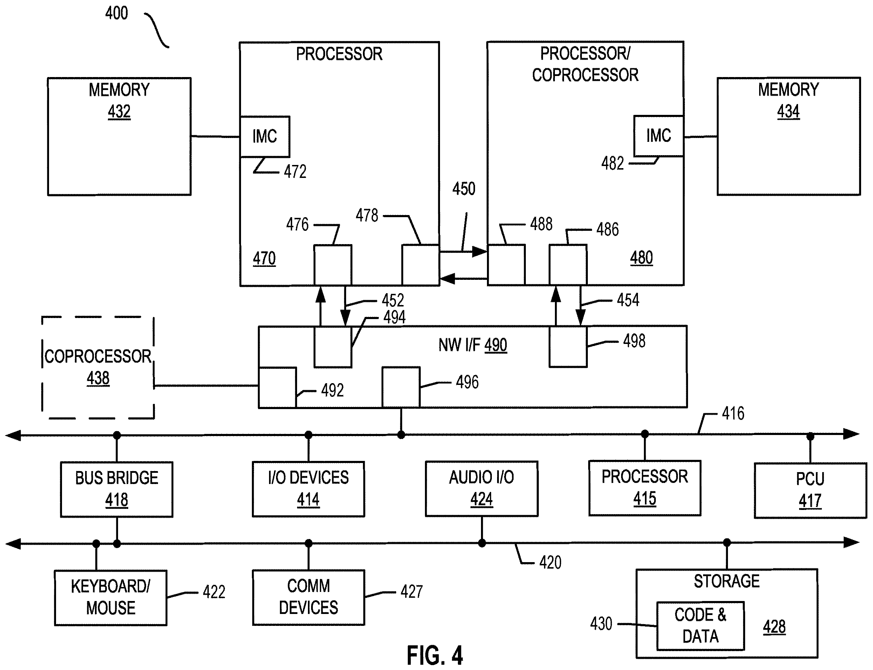

FIG. 1A illustrates an apparatus (e.g., a computing system) 100 for instruction tagging according to an embodiment. Apparatus 100 may correspond to a computer system such as multiprocessor system 400 in Fig 4.

Apparatus 100 is shown in Figure 1A as including processor 110 and memory 150, each of which may represent any number of corresponding components (e.g., multiple processors and/or processor cores, multiple dynamic random-access memories (DRAMs), etc.)

For example, processor 110 may represent all or part of one or more hardware components including one or more processors, processor cores, or execution cores integrated on a single substrate or packaged within a single package, each of which may include multiple execution threads and/or multiple execution cores, in any combination. Each processor represented as or in processor 110 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 110 may be architected and designed to operate according to any instruction set architecture (ISA), with or without being controlled by microcode. For convenience and/or examples, some features (e.g., instructions, etc.) may be referred to by a name associated with a specific processor architecture (e.g., Intel^{®} 64 and/or IA32), but embodiments are not limited to those features, names, architectures, etc.

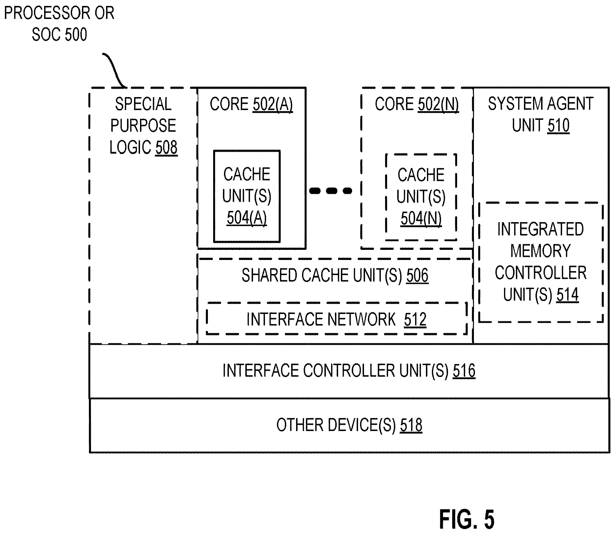

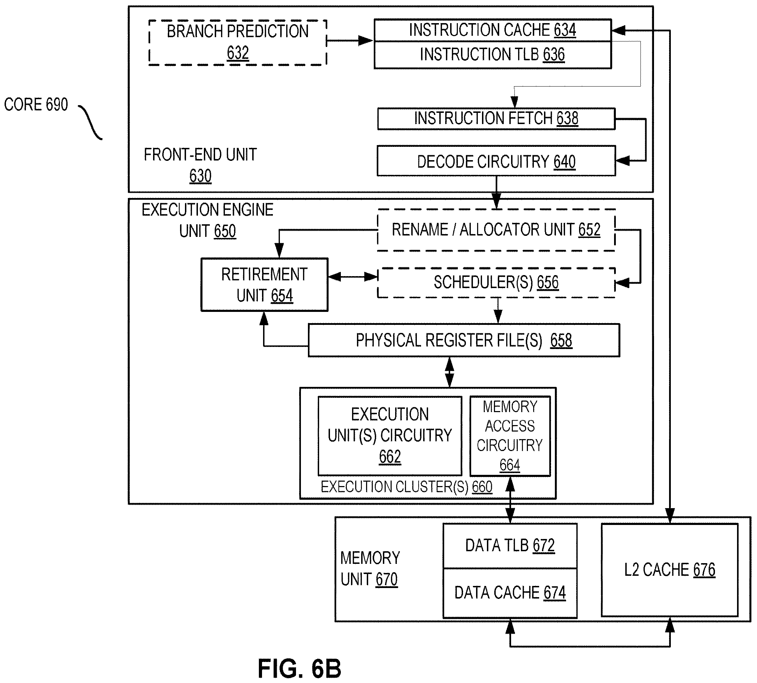

Processor 110 may be implemented in circuitry, gates, logic, structures, hardware, etc., all, or parts of which may be included in a discrete component and/or integrated into the circuitry of a processing device or any other apparatus in a computer or other information processing system. For example, processor 110 in Figure 1A may correspond to and/or be implemented/included in any of processors 470, 480, or 415 in Figure 4, processor 500 or one of cores 502A to 502N in Figure 5, and/or core 690 in Figure 6B, each as described below.

Memory 150 may represent one or more DRAMs and/or other memory components providing a system memory or other memory or storage in or for apparatus 100. Memory 150 may contain one or more memory objects 152. Any such memory object may represent an object, region, structure, segment, stack frame, etc. in memory, in addition to associated program code or instructions, to which the use of instruction tagging is applied in addition to data tagging according to embodiments may be relevant and which may be referred to for convenience as an object.

As shown, processor 110 includes instruction unit 120, execution unit 140, and secure memory access unit 130 (which may be included within execution unit 140. Processor 110 may include any number of each of these elements (e.g., multiple execution units) and/or any other elements not shown in Figure 1A.

Instruction unit 120 may correspond to and/or be implemented/included in front-end unit 630 in Figure 6B, as described below, and/or may include any circuitry, gates, logic, structures, hardware, etc., such as an instruction decoder, to fetch, receive, decode, interpret, schedule, and/or handle instructions, such as a data movement, load, or store instruction (e.g., mov) 122, an address computation instruction (e.g., load effective address or lea) 124, etc., to be executed by processor 110. In Figure 1A, instructions that may be decoded or otherwise handled by instruction unit 120 are represented as blocks with broken line borders because these instructions are not themselves hardware, but rather that instruction unit 120 may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by execution unit 140. Operands or other parameters may be associated with an instruction implicitly, directly, indirectly, or according to any other approach.

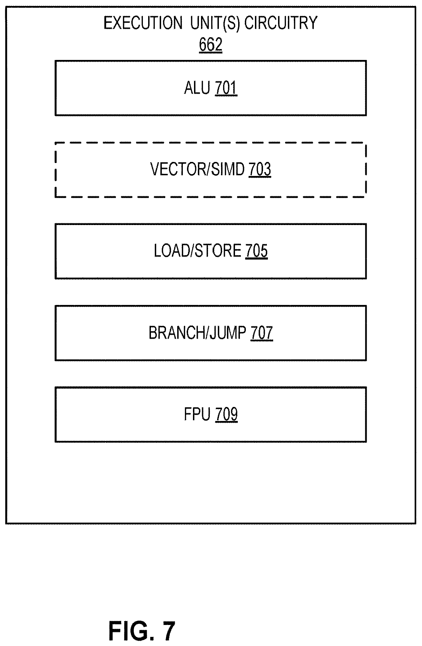

Execution unit 140 may correspond to and/or be implemented/included in any of execution engine 650 in Figure 6B and/or execution unit circuitry 662 in Figures 6B and 7, each as described below, and/or include any circuitry, gates, logic, structures, hardware, etc., such as arithmetic units, logic units, floating point units, shifters, load/store units, etc., to process data and execute instructions (including those shown in Figure 1A), micro-instructions, and/or micro-operations. Execution unit 140 may represent any one or more physically or logically distinct execution units.

Secure memory access unit 130 may represent and/or include any circuitry, gates, logic, structures, hardware, etc., such as cryptography units, arithmetic units, logic units, load/store units, etc., to control, perform, participate in, etc. the encryption, decryption, coding, encoding, etc. of objects and their members as described in this specification.

Secure memory access unit 130 may include memory tagging unit 132, which may represent and/or include any circuitry, gates, logic, structures, hardware, etc., to control, perform, participate in, etc. memory tagging.

For example, memory tagging unit 132 may access tagging information from memory. Tags may be stored in sequestered memory or in a separate table where there is a tag location corresponding to every granule (e.g., 8 bytes) of memory location. Tag locations may be associated with either the physical or virtual/linear address locations of instruction or data granules stored in memory. When a data granule is accessed by code, instruction tags for the associated code granule and data granule location are looked up by the memory tagging unit from memory, the cache hierarchy, or a tag cache (which may also cache prior tag look ups for the same addresses). Tags may alternatively be stored in error correcting code (ECC) memory or computed from ECC codes and included with cache lines as associated metadata for the cache line stored in the cache hierarchy. The memory tagging unit may combine an instruction tag value with an address/pointer tag value and compare this value with the accessed data tag value.

Although shown as a separate unit in Figure 1A, in various embodiments, secure memory access unit 130 and/or memory tagging unit 132 may be partially or wholly integrated or included in another unit of processor 110, such instruction unit 120 and/or execution unit 140.

For example, embodiments may provide for memory tagging of individual member variables, data elements, etc. (any of which may be referred to as a member) of objects, stack frames, data structures, etc. (any of which may be referred to as an object) using a combination of instruction tagging and a relative enumeration field in the pointer to provide tags for individual members. Embodiments may provide finer granularity of protection than typical memory tagging approaches, for example, reducing 16-byte granules to 8-byte granules to better match individual member sizes in a 64-bit processor architecture. Various embodiments may use larger (with additional padding or separation between variables, combining members under the same tag, etc.) or smaller granules may be used.

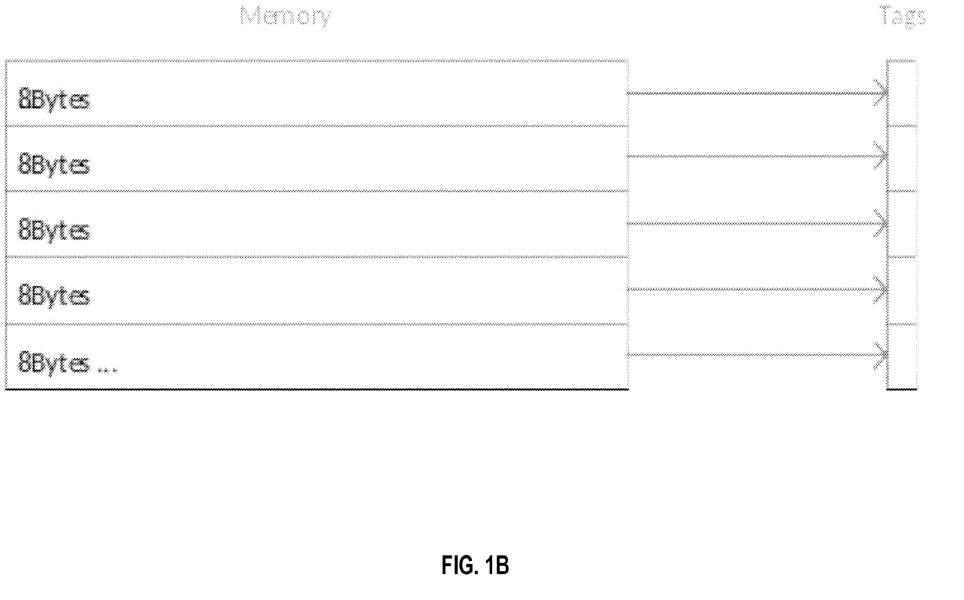

In embodiments, granular memory locations (e.g., each granule or location of a granular size) may have corresponding tags stored in a tag table, as shown in Figure 1B. When the processor performs a load or store operation for a memory location, it will look up the tag value in the tag table corresponding to that memory location to verify the tag value. In addition to data, instructions are stored in memory and may therefore have associated tags. This instruction tag value is used in combination with a linear/virtual memory address (pointer) tag to compute the tag for the data granule that is then compared with the data granule's associated tag value stored in the tag table. Embodiments may alternatively store tag values in parallel memory such as ECC memory or compute tag values from ECC values (for example, as an additional Reed Solomon symbol indicating the tag value for a cache line or portion thereof) associated with a cache line (e.g., the tag values are carried as additional metadata within a cache line). Parallel memory accesses have the advantage of providing the tag values at the same time memory is accessed for code/data instead of using additional memory accesses to access a tag table from a separate location in memory.

Embodiments may be described by example using the following sample of C source code and its corresponding x86 assembly code:

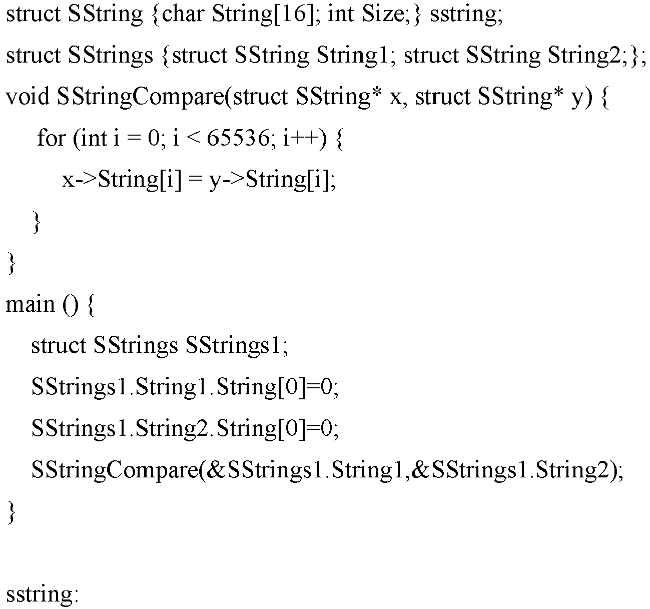

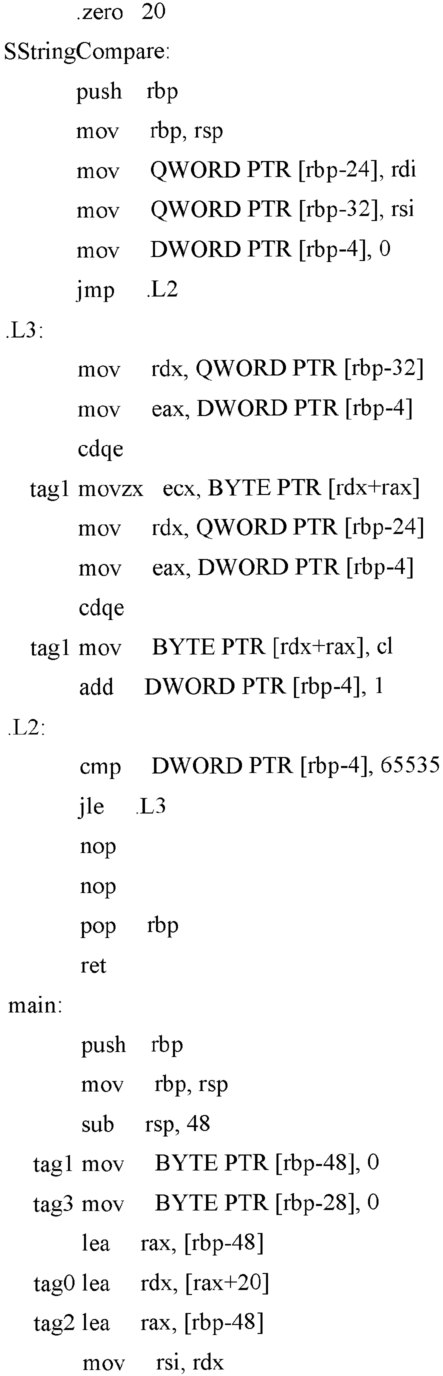

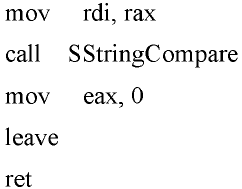

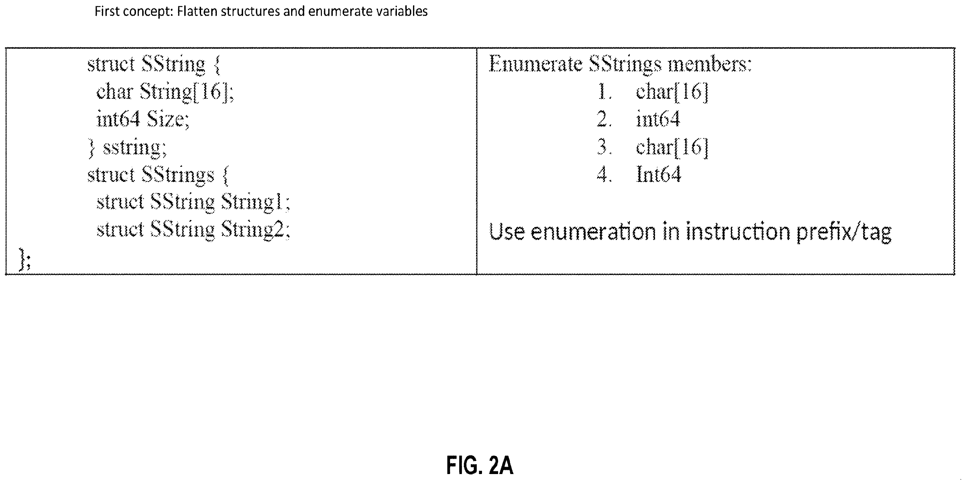

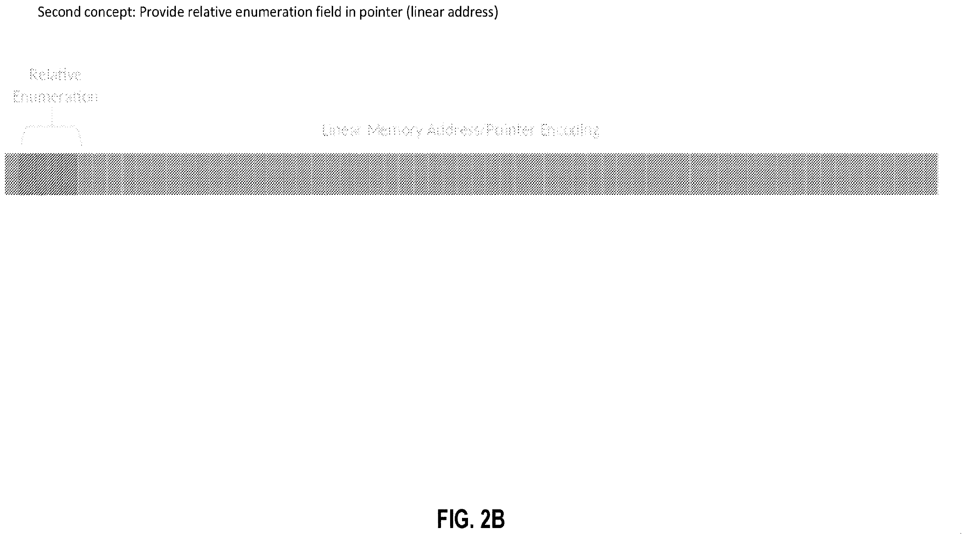

Embodiments may be implemented including and/or according to two concepts. A first concept is to flatten data structures/objects and enumerate member variables, as illustrated by example in Figure 2A. A second concept is to provide relative enumeration fields in pointers (e.g., linear/virtual addresses), as illustrated by example in Figure 2B.

Referring to Figure 2A, with each tag corresponding to an 8-byte granule, for an instance of an SStrings structure, there would be two tags each with a value of 1 to cover the first 16-byte character array, a single tag with a value of 2 to cover the first 64-bit integer, two tags each with a value of 3 to cover the second 16-byte character array, and a single tag with a value of 4 to cover the second 64-bit integer.

Referring to Figure 2B, the value (e.g., pointer tag value) in the relative enumeration field represents the starting value of the enumeration in an instance of an object. It may be (as shown) a 4-bit tag to be consistent with an existing memory tagging technique, but other sizes are possible in various embodiments. Given the limited size of tag fields, the value may roll over (e.g., when enumerating a 4-bit value from 15, an additional increment may return to the value 0).

In embodiments, in connection with a load or store operation, the processor adds the tag value associated with the executing instruction to the relative enumeration in the pointer (address), and then compares the resulting value to the memory tag associated with the data granule that the load or store operation is attempting to access. For instructions not attempting to access, copy, move, etc. data (e.g., instructions other than load or store), the tag values may be ignored. In embodiments, load/store instructions may be aligned with their corresponding tag (granule).

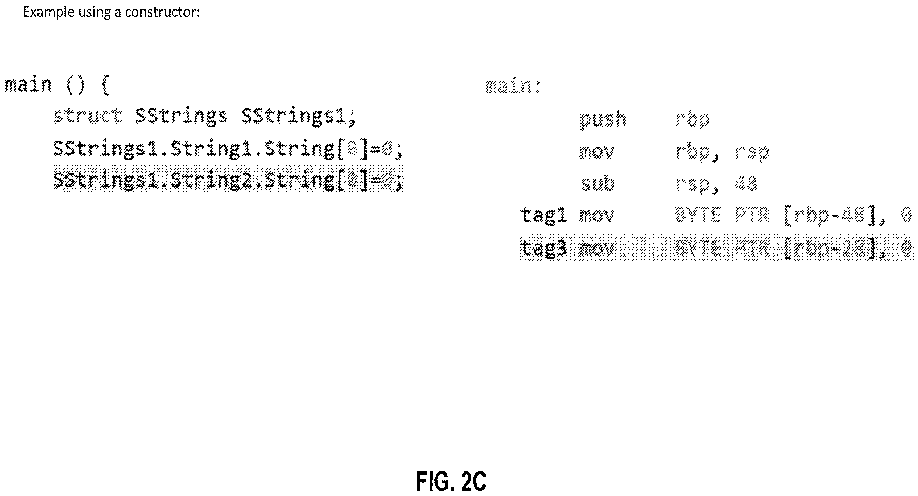

Referring to Figure 2C, tags are applied to the instructions for the named SStrings structures such that there is a direct association between instructions and the data members of the composite structure they access. Since the tags are associated with a code section, the compiler may create a template of the associated memory tags corresponding to the instructions and the loader or other component may set the memory tags accordingly or provide the template to other software to initialize the memory tags for the code section. Software tools may also be developed to tag existing code sections after reconstructing (decompiling) the code. The tags may be applied to the load/store instructions associated with the individual memory data accesses. Because the tag value is different between any two string members, an overflow from one member into another will result in a tag mismatch (when comparing with the memory tag for the data), preventing data leaks and memory corruption of members.

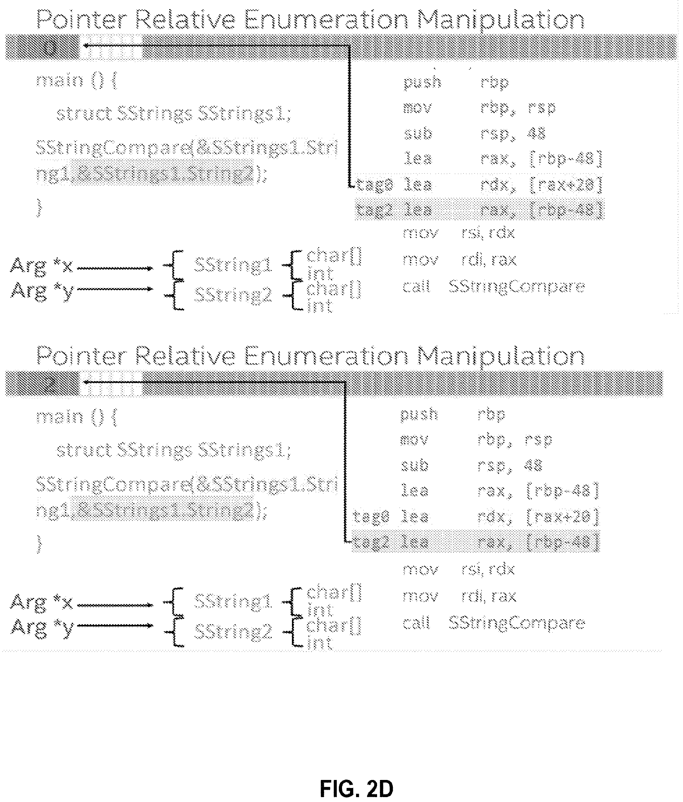

Referring now to the pointer relative enumeration manipulation example shown Figure 2D, to allow manipulation of substructures across functions and specialized libraries that operate on more primitive data types, the pointer's relative enumeration field allows the compiler or other tool to specify the relative offset using a tag corresponding to the location of the associated LEA instruction. The causes the LEA operation to provide an address (pointer) to the associated substructure with the correct relative enumeration. For example, the LEA may add the tag value to the input memory address relative enumeration field of the input address (e.g., in the input register) to produce the correctly formatted/encoded/encrypted address with the updated enumeration of the output address (e.g., in the output register).

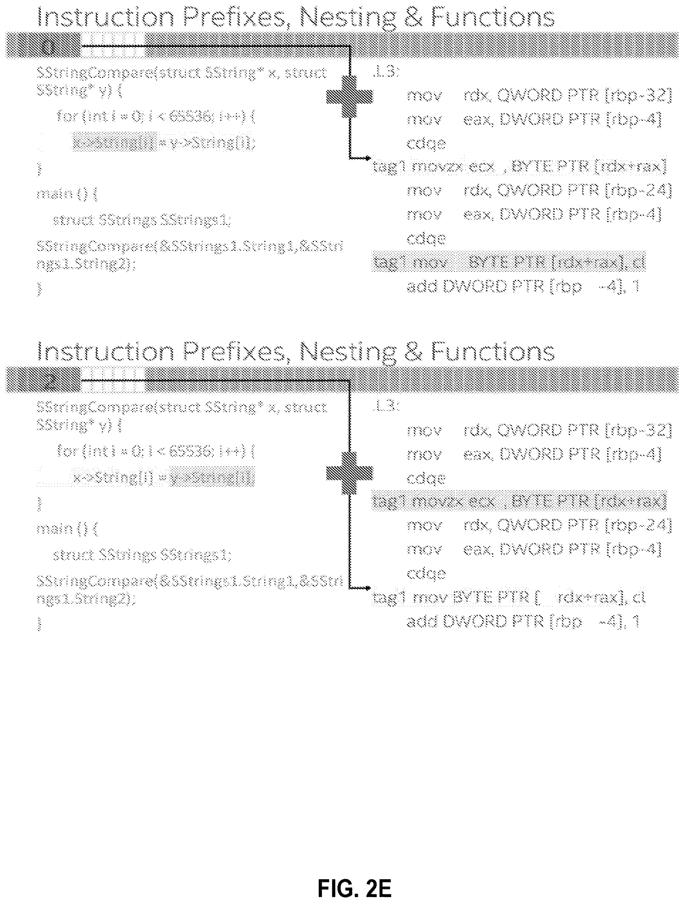

Then, referring to the example shown in Figure 2E, the accessing function may use the relative enumeration pointer field with instruction tags designed for functions that understand only a substructure of primitive data type of a nested structure or object by adding the relative enumeration in the address to the enumeration specified in the instruction tag. A string compare function may understand the primitive data structure of a string buffer and a size variable for the string length, but not a specific data structure that may contain one or more of these string structures. The relative enumeration provides the relative location of the nested primitive structure within the larger structure, as well as incorporating the instance of a particular allocated structure. For example, the SStringCompare function understands the more primitive SString data type, not the composite SStrings data type. The source and destination addresses passed into the function, however, have the correct relative enumeration of each SString substructure nested within the SStrings data structure. The tag values added to the mov instructions are then used to correctly access the byte array members of the SString structures.

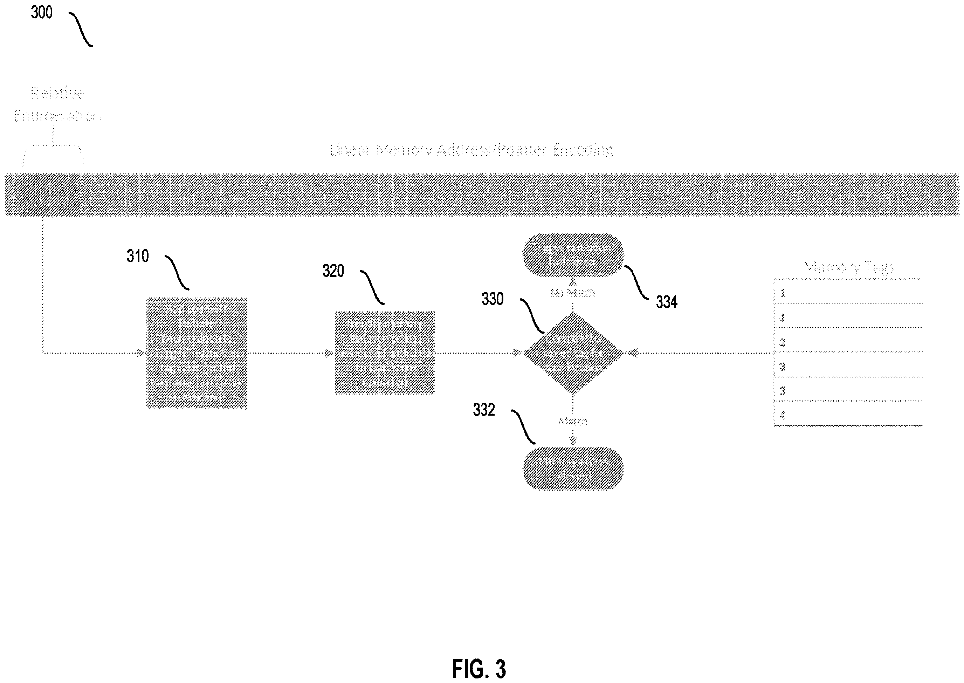

Figure 3 illustrates a method 300 for instruction tagging according to an embodiment. Method 300 may be performed by and/or in connection with the operation of an apparatus such as apparatus 100 in Figure 1 and/or in connection with compilation of code to be executed by an apparatus such as apparatus 100; therefore, all or any portion of the preceding description of apparatus 100 may be applicable to method 300.

In 310, a pointer's relative enumeration is added to a tagged instruction's tag value for an executing load/store instruction (e.g., to attempt a memory access) to generate a first (generated) tag value. In 320, a memory location of a second (stored) tag value associated with the data for the load/store operation (corresponding to the load/store instruction) is identified.

In 330, the first (generated) tag value is compared to the second (stored) tag value. If a match, then in 332, the memory access is allowed. If a mismatch, then in 334, the memory access is blocked (e.g., by triggering an exception, fault, error, etc.

In embodiments, initialization of memory by the memory allocator may differ from existing than in traditional memory tagging because knowledge of the allocated object/structure type (internal structure) may be needed to produce the correct corresponding memory tag values for the object/structure. When calling an allocation function (e.g., malloc or new), a template of memory tags may be used to set the memory tags (e.g., using a set tag instruction or similar) for the corresponding object type. The relative enumeration of the object's instance is first added to these tags before the tags are set, so they correspond to the correct instance of the object as well as the relative enumeration of the object's individual members. A compiler may initialize the memory tags for a new instance of an object knowing the size and type cast for a new memory allocation (e.g., ptr = (cast-type*) malloc(byte-size)). Other embodiments may rely on the constructor to first access the memory and configure the tags. Alternatively, "undefined" tag values may be used to trigger an exception on first access, allowing an exception handler to select the correct tag template for a newly allocated object type.

In embodiments, data copy and/or move functions (e.g., memcpy) may preserve an object's (or group of objects) tag enumeration by also copying the tag values for the source to the tag values of the destination. The destination may have a different starting relative enumeration in the pointer field, so the memory tags may be adjusted by adding the relative enumeration difference between the source and destination. This way, memcpy need not know anything about the internal structure of an object when copying it, yet may still create the correct tag values for the copy.

Similar to heap allocations, stack frames may also be tagged for individual variables on the call stack. The compiler may do this tagging using templates, such that on a function call the memory tags associated with the new stack frame are populated with the correct values corresponding to the callee function's instructions. These stack frame "tag templates" may be copied from a template location to update the tag values corresponding to the current stack frame. Similarly, the stack pointer may be updated with the correct relative enumeration of the current stack frame instance to prevent replay of stack frames using the same enumeration.

Global variables may also be individually tagged along with their accessing instructions to prevent overflows or underflows of global buffers or global variables accessed with the wrong data type (e.g., a byte global variable location being overwritten by a large floating-point number by the processor).

In some embodiments, instead of using memory tags for code sections to tag individual instructions, load/store and lea instructions may instead use prefix values to indicate the tag value. This approach may allow instructions to be unaligned and provide for more compressed code than requiring instructions be aligned with the memory granule size for tagging. This approach, however, may sacrifice the compatibility with existing code that may be provided by the tagged instruction approach and use compiler support to add the prefix values to compiled instructions.

### Example apparatuses, methods, etc.

According to some examples, an apparatus (e.g., a processing device) includes an instruction decoder to decode a first instruction having an instruction tag value; and execution circuitry coupled to the instruction decoder, the execution circuitry to perform one or more operations corresponding to the first instruction, including generating a first data tag value based on the instruction tag value and a relative enumeration in a pointer to data.

According to some examples, a method includes decoding, by an instruction decoder of a processing device, a first instruction having an instruction tag value; and performing, by execution circuitry coupled to the instruction decoder, one or more operations corresponding to the first instruction, including generating a first data tag value based on the instruction tag value and a relative enumeration in a pointer to data.

Any such examples may include any or any combination of the following aspects. The instruction decoder may also be to decode a second instruction, the second instruction having a pointer tag value based on the relative enumeration in the pointer. The method may also include decoding, by the instruction decoder, a second instruction, the second instruction having a pointer tag value based on the relative enumeration in the pointer. The data may correspond to a member of an object. The instruction tag value may be related to the member. The pointer tag value may be related to the object. The one or more operations may also include identifying a memory location of a second data tag value associated with the data. The one or more operations also include comparing the second data tag value to the first data tag value. The one or more operations also include blocking access to the data in response to detecting a mismatch between the second data tag value and the first data tag value. The first data tag value may be derived from a sum of the instruction tag value and the relative enumeration.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

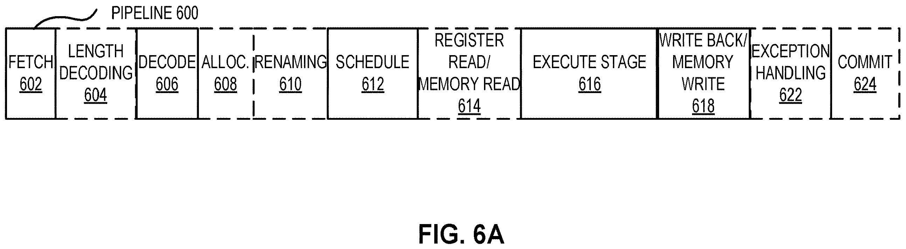

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

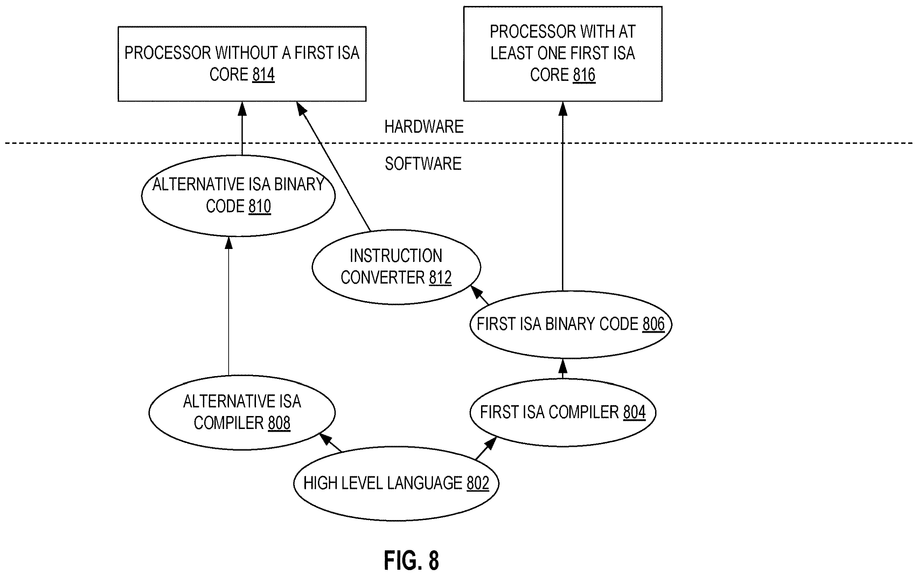

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A processor device comprising:
an instruction decoder to decode a first instruction having an instruction tag value; and
execution circuitry coupled to the instruction decoder, the execution circuitry to perform one or more operations corresponding to the first instruction, including generating a first data tag value based on the instruction tag value and a relative enumeration in a pointer to data.

2. The processor device of claim 1, wherein the instruction decoder is also to decode a second instruction, the second instruction having a pointer tag value based on the relative enumeration in the pointer.

3. The processor device of claim 1 or 2, wherein the data corresponds to a member of an obj ect.

4. The processor device of claim 3, wherein the instruction tag value is related to the member.

5. The processor device of claim 3, wherein the pointer tag value is related to the object.

6. The processor device of any of claims 1-5, wherein the one or more operations also include identifying a memory location of a second data tag value associated with the data.

7. The processor device of claim 6, wherein the one or more operations also include comparing the second data tag value to the first data tag value.

8. The processor device of claim 7, wherein the one or more operations also include blocking access to the data in response to detecting a mismatch between the second data tag value and the first data tag value.

9. The processor device of any of claims 1-8, wherein the first data tag value is derived from a sum of the instruction tag value and the relative enumeration.

10. A method comprising:
decoding, by an instruction decoder of a processing device, a first instruction having an instruction tag value; and
performing, by execution circuitry coupled to the instruction decoder, one or more operations corresponding to the first instruction, including generating a first data tag value based on the instruction tag value and a relative enumeration in a pointer to data.

11. The method of claim 10, wherein the one or more operations also include identifying a memory location of a second data tag value associated with the data.

12. The method of claim 11, wherein the one or more operations also include comparing the second data tag value to the first data tag value.

13. The method of claim 12, wherein the one or more operations also include blocking access to the data in response to detecting a mismatch between the second data tag value and the first data tag value.

14. A non-transitory machine-readable medium storing at least a single instruction which, when executed by a machine, causes the machine to perform a method comprising:
decoding, by an instruction decoder of a processing device, a first instruction having an instruction tag value; and
performing, by execution circuitry coupled to the instruction decoder, one or more operations corresponding to the first instruction, including generating a first data tag value based on the instruction tag value and a relative enumeration in a pointer to data.

15. The non-transitory machine-readable medium of claim 14, wherein the one or more operations also include:
identifying a memory location of a second data tag value associated with the data;
comparing the second data tag value to the first data tag value; and
blocking access to the data in response to detecting a mismatch between the second data tag value and the first data tag value.
